# FASCICULE DE BREVET EUROPEEN

(11) **EP 2 362 583 B1**
(45) Date de publication et mention de la délivrance du brevet: **17.08.2016**
(21) Numéro de dépôt: 11155145.3
(22) Date de dépôt: 21.02.2011
(51) Int. Cl.: H04L 12/28, H04L 12/24, G08C 17/02

(54) **Procédé de configuration d'une installation domotique comprenant un premier équipement et un deuxième équipement aptes à communiquer l'un avec l'autre**
Konfigurationsverfahren einer Heimanlage mit zwei verschiedenen Anlagen, die miteinander kommunizieren können
Method for configuring a home-automation installation including a first device and a second device suitable for communicating with one another

(30) Priorité: 22.02.2010 FR 1051265
(43) Date de publication de la demande: 31.08.2011
(73) Titulaire: Somfy SAS, 74300 Cluses (FR)
(72) Inventeur: Augustin, Barbara, 74950, Scionzier (FR); Pellarin, Florent, 74370, Saint Martin Bellevue (FR)
(74) Mandataire: Novaimo

(56) Documents cités:
- EP-A1- 1 638 257
- EP-A1- 1 786 166
- EP-A1- 2 018 000
- FR-A1- 2 837 045
- US-A1- 2007 025 347

## Description

L'invention concerne le domaine des communications dans un réseau domotique comprenant une pluralité d'équipements devant communiquer les uns avec les autres. Ces équipements correspondent en particulier à des capteurs (de confort ou de sécurité), des points de commande à distance (télécommandes, centrales de commande par exemple) et des actionneurs. Ces équipements comprennent des émetteurs et/ou des récepteurs d'ordres. En particulier dans des réseaux domotiques sans fil dans lesquels la communication se fait par des média électromagnétiques (ondes radiofréquences par exemple), ils comprennent des émetteurs et/ou des récepteurs d'ordres sans fil.

L'invention s'applique en particulier à un réseau domotique dans lequel au moins une partie des équipements est dite autonome, c'est-à-dire que ces équipements comprennent leur propre source d'énergie, par exemple une batterie. Du fait de cette autonomie limitée, il est nécessaire de garantir une communication optimale entre les équipements pour économiser les ressources tout en garantissant la communication.

Sur le réseau domotique, des points de commande ou des capteurs (dits équipements de communication) s'échangent ou envoient une certaine quantité d'informations à un équipement de type actionneur. L'équipement qui reçoit ces informations les prend éventuellement en compte pour agir. Ces informations prennent la forme de mesures, d'ordres ou de signalisation d'un événement.

Les communications entre deux équipements peuvent prendre plusieurs formes :
- Communication périodique :
   Les informations sont émises de manière régulière, suivant une fréquence déterminée, par exemple un capteur envoie la valeur d'une grandeur physique mesurée toutes les minutes. L'inconvénient d'une telle solution est que les données ne sont mises à jour qu'à la fréquence prédéterminée (donc manque de réactivité). Pour ne pas pénaliser l'autonomie du capteur, cette fréquence doit être fixée assez faible, et/ou liée au temps de recharge d'une batterie du capteur. Par ailleurs, un certain nombre d'émissions sont inutiles lorsque la grandeur physique ne varie pas ou varie très peu.
- Communication sur dépassement d'un seuil donné ou sur dépassement d'un seuil de variation donné
   Les informations sont alors émises sans régularité, par exemple sur apparition d'un événement détecté par le capteur. L'inconvénient de cette solution est que le seuil de déclenchement de la communication n'est pas forcément adapté à différentes applications ou équipements domotiques. Le résultat est que le seuil de déclenchement doit être fixé assez bas pour satisfaire toutes les applications (par exemple, pour un store à bras et pour un store ayant une toile verticale le long d'une fenêtre, les seuils de vent entraînant la fermeture du store sont différents, le store à bras étant notamment plus exposé). Si le choix de seuil unique pour un capteur est fixé au seuil le plus bas pour protéger l'un des produits, un ou d'autres produits seront pilotés en fermeture plus souvent que nécessaire. L'utilisateur risque d'être pénalisé par une telle situation. Il en résulte une grande quantité de communications non nécessaires qui pénalisent l'autonomie du capteur. De plus, contrairement aux communications périodiques pour lesquelles il est possible de synchroniser les échanges pour communiquer à intervalles donnés et limiter les plages d'émission et d'écoute à ces intervalles, il est nécessaire que le point de commande et/ou l'actionneur soit à l'écoute quasiment en permanence. L'autonomie en est fortement pénalisée.
- Il existe un dernier type d'événement déclenchant la communication entre capteur et point de commande, mais sans lien avec la détection de la grandeur physique, par exemple des évènements internes liés au fonctionnement du capteur lui-même :
   batterie faible, mesure hors plage de température, mauvais fonctionnement de tel ou tel composant.

On connaît du document EP 1 638 257 un procédé de configuration d'une installation audiovisuelle permettant de réduire le nombre de câblages en utilisant des liaisons radio entre des équipements. Pour ce faire, un équipement maître requiert des informations sur les équipements esclaves et détermine, en utilisant ces informations, des exigences de fréquence et des options de configuration du réseau.

On connaît du document EP 2 018 000 un procédé de configuration dans lequel un équipement peut communiquer selon différents protocoles sans fil. Le document US2007/0025347 décrit un système comprenant un noeud maître et un noeud esclave où le noeud esclave est un capteur qui adapte son protocole de communication selon des données reçues du noeud maître.

Le but de l'invention est de fournir un procédé de configuration remédiant aux inconvénients ci-dessus et améliorant les procédés de configuration connus de l'art antérieur. En particulier, l'invention permet d'améliorer les installations existantes en garantissant à la fois la bonne transmission et réception des informations, leur intérêt (lié à la réactivité de l'installation) et en minimisant les besoins en énergie des différents objets communicants.

Le procédé selon l'invention est défini par la revendication 1.

Différents modes d'exécution du procédé sont définis par les revendications 2 à 8.

Une installation selon est définie par la revendication 9.

Un programme selon est défini par la revendication 10.

L'invention sera mieux comprise à la lecture de la description qui va suivre, donnée uniquement à titre d'exemple et faite en se référant aux dessins annexés sur lesquels :
La figure 1 représente un mode de réalisation d'une installation selon l'invention.
La figure 2 est un ordinogramme d'un premier mode d'exécution du procédé de configuration selon l'invention.
La figure 3 est un diagramme schématisant le fonctionnement d'un deuxième mode d'exécution du procédé de configuration selon l'invention.

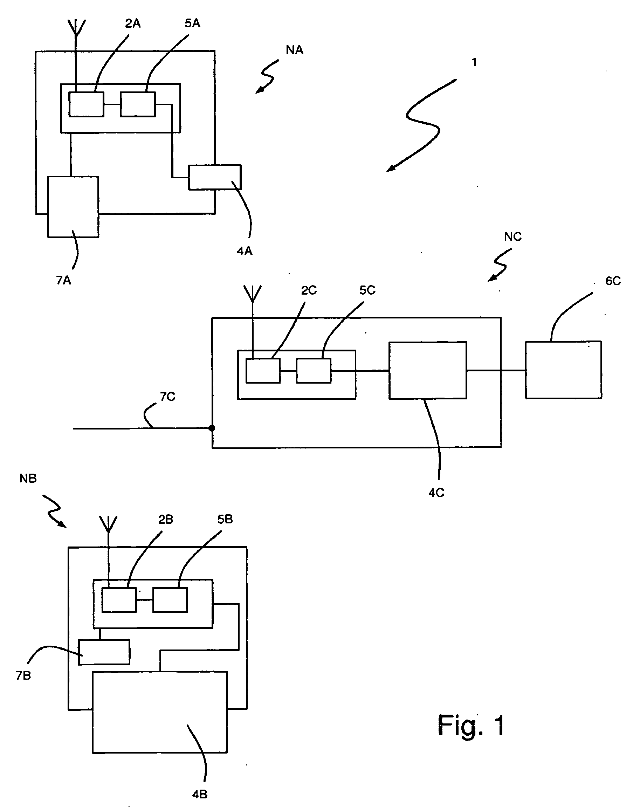

Dans un mode de réalisation représenté à la figure 1, une installation domotique 1 comprend principalement un premier équipement NA et un deuxième équipement NB. Le premier équipement NA correspond par exemple à un capteur mesurant et/ou évaluant un paramètre ambiant grâce à une sonde 4A. Le deuxième équipement NB correspond à un point de commande d'un ou plusieurs équipements domotiques tels que stores motorisés, volets roulants motorisés, ou équivalent. Il est muni d'une interface de saisie et d'information 4B. Un troisième équipement NC correspond à un store de terrasse équipé d'un actionneur électromécanique 4C pilotant les mouvements de la toile de store 6C.

Les équipements de l'installation domotique sont destinés à communiquer entre eux et avec d'autres équipements de l'installation, suivant un même protocole de communication, par exemple le protocole io-homecontrol^{®}. En particulier, les premier et deuxième équipements sont destinés à communiquer entre eux et à échanger des informations. Pour cela, les différents équipements de l'installation comprennent chacun un émetteur-récepteur ou transmetteur 2A, 2B, 2C. La communication est par exemple assurée par un média sans fil tel que des ondes électromagnétiques et, notamment des ondes radioélectriques.

Chaque équipement comprend, en connexion avec le transmetteur, une unité logique de traitement 5A, 5B, 5C.
Ces unités logiques de traitement comprennent des moyens matériels et logiciels de définition d'un fonctionnement des équipements conforme au procédé de configuration selon l'invention. En particulier, les unités logiques de traitement comprennent des moyens logiciels de mise en oeuvre des étapes essentielles du procédé de configuration selon l'invention. Les moyens logiciels peuvent comprendre des programmes informatiques.

Chaque équipement comprend également une connexion à une source d'alimentation 7A, 7B, 7C. Le premier équipement NA est par exemple un équipement autonome, c'est-à-dire qu'il dispose de sa propre source d'alimentation (par exemple un moyen de stockage d'énergie électrique alimenté grâce à un panneau de cellules photovoltaïques). Alternativement, il est alimenté par le secteur. Le deuxième équipement NB est par exemple une télécommande nomade, alimentée par des piles ou des batteries (alternativement, il peut s'agir d'une unité de commande alimentée sur secteur). Le troisième équipement NC est branché sur le secteur.

Dans un mode de fonctionnement de l'installation domotique, les signaux émis sur le réseau domotique sont soit des ordres de commande d'un équipement (ordre d'ouverture, de fermeture, de positionnement intermédiaire), soit des messages d'information relatifs au paramètre ambiant mesuré par le capteur (par exemple "vent présent", "soleil absent", "seuil dépassé"). Des messages de demande d'information ou requêtes peuvent également être transmis sur le réseau. En retour de ces différents signaux, des accusés de réception et/ou accusés d'exécution peuvent être émis.

Dans un exemple d'installation domotique, le premier équipement NA correspond à un capteur météorologique et envoie des informations régulièrement à l'attention du point de commande correspondant au deuxième équipement NB, celui-ci mettant alors en oeuvre si nécessaire une gestion particulière de l'équipement à piloter, via l'actionneur de store. Ces informations reçues au niveau du point de commande sont en effet retransmises sous forme d'un ordre de commande, au troisième équipement, qui exécute l'ordre. Par exemple, si le premier équipement NA signale un vent supérieur à un seuil prédéfini, le point de commande NB émet un ordre pour replier le store si celui-ci est déplié ou se place dans un mode dans lequel il inhibe l'émission d'ordres de déploiement du store en cas d'action manuelle au niveau du point de commande. Il est bien entendu que l'information peut également être transmise directement depuis le capteur vers l'actionneur, dans le cas où celui-ci possède les moyens de gérer directement cette information.

Alternativement, si le premier équipement NA est un capteur de luminosité et/ou solaire et signale un seuil de luminosité important, le point de commande ou l'actionneur décide de déployer le store tandis qu'un troisième équipement NL (non représenté) lié à une lampe contribue à couper l'alimentation de la lampe dont le fonctionnement n'est plus nécessaire.

L'installation fonctionne en outre dans un mode de configuration, au cours duquel les liens et les schémas de communication du réseau domotique ou de l'installation domotique sont définis.

Par exemple, pour un fonctionnement sécurisé de l'installation, notamment dans le cadre d'un réseau de communication sans fil, les équipements communicants doivent être appairés, c'est-à-dire qu'ils échangent, lors d'une phase de configuration, des informations leur permettant par la suite de s'adresser des messages dédiés.

Globalement, les échanges entre les différents équipements domotiques, dans le mode de configuration comprenant cette phase de configuration, vont être différents des échanges dans le mode de fonctionnement.

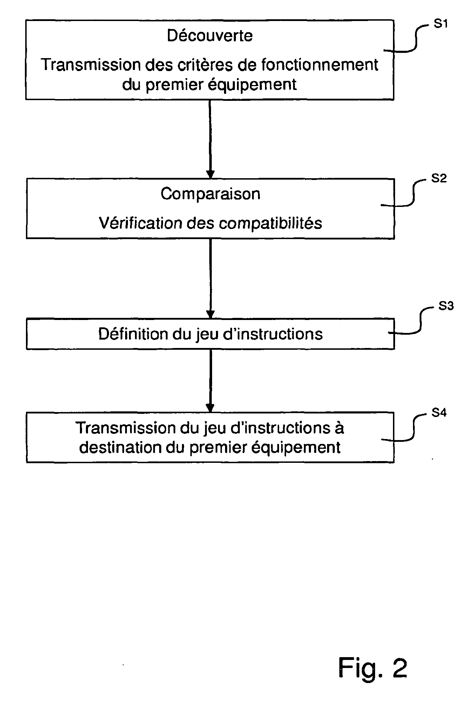

La figure 2 représente de manière schématique les différentes étapes d'un premier mode d'exécution d'un procédé de configuration de l'installation domotique.

Dans ce mode de configuration, une première étape dite de découverte S1 a lieu, au cours de laquelle le premier équipement informe le deuxième équipement de ses critères de fonctionnement. Cette étape de découverte comprend notamment la transmission par au moins l'un des équipements d'un identifiant qui va permettre son appairage avec l'autre équipement.

Selon l'invention, l'étape de découverte comprend également la transmission par le premier élément, d'un fichier de données, ces données sont des critères de fonctionnement caractérisant le premier élément, ses paramètres de fonctionnement et/ou ses capacités de communication : modes de dialogue disponibles, résolution, information d'autonomie, etc.

Ainsi, dans le cas où le premier équipement est un capteur, celui-ci transmet notamment certaines ou l'ensemble des informations suivantes :
- son identifiant,
- son type (capteur vent, soleil, etc.)
- l'unité du paramètre physique mesurée,
- les valeurs minimales et maximales mesurées
- l'échelle et la résolution,
- le ou les modes opératoires acceptés
- le nombre maximum d'événements traités,
- la fréquence de mesure minimale, maximale,
- la fréquence d'émission minimale, maximale.

Dans la description ci-jointe, la fréquence de mesure est la durée entre deux mesures, la fréquence d'émission la durée entre deux émissions. Il ne s'agit pas de fréquence au sens électrique ou radio du terme.

Il est connu du document US6791467 de transmettre vers une télécommande nomade et à objectif universel, un fichier de donnée (setup file) comprenant une partie d'identification et une partie fonctionnelle. Dans ce document, les équipements à commander transmettent régulièrement la partie d'identification, et sur une requête issue de la télécommande, transmettent à celle-ci la partie fonctionnel du fichier de données. Une fois cette partie fonctionnelle mise en mémoire dans la télécommande, les équipements à commander sont classés « existing and available ». La partie fonctionnelle comprend par exemple le statut de l'équipement, des données concernant l'information graphique de l'interface de commande, notamment des boutons de commande.

L'étape de découverte peut être mise en oeuvre au cours de la première installation des équipements, par exemple à la première mise sous tension (mise en place des piles, charge batterie suffisante, etc.), lorsque les différents équipements ne sont pas appairés. La transmission du fichier de données peut être émise automatiquement au cours de cette étape de découverte, suite à une requête émise par un des autres équipements de l'installation ou suite à une action particulière de l'installateur au niveau du premier équipement. La transmission du fichier de données comprenant les critères de fonctionnement du premier équipement peut être réalisée en une fois ou, comme dans l'art antérieur, en plusieurs étapes.

Ainsi, dans l'étape de découverte, le premier équipement informe le deuxième équipement de critères de son fonctionnement.

Suite à l'étape de découverte, une étape de comparaison S2 a lieu, au niveau du point de commande, au cours de laquelle celui-ci évalue la correspondance entre les critères de fonctionnement du premier équipement et les besoins de communication établis par le deuxième équipement pour l'installation. En particulier, le point de commande vérifie la compatibilité entre ses propres capacités et le capteur, selon l'usage requis dans l'installation.

Notamment, le point de commande vérifie que la fréquence de mesure ou d'émission acceptable par le capteur pour garantir son autonomie pendant une période donnée est également acceptable du point du vue de l'autonomie du point de commande et/ou plus généralement du confort et de la sécurité de l'installation. Le point de commande peut également vérifier que les plages de valeur couvrent les données que peut accepter l'actionneur ou le point de commande lui-même, que les sensibilités sont suffisantes pour l'usage, etc.

Ainsi, au cours de l'étape de comparaison, le deuxième équipement compare des critères de fonctionnement du premier équipement avec des besoins de communication qu'il définit pour l'installation.

Suite à l'étape de comparaison, une étape de mise à jour ou de définition d'instructions S3 a lieu. Cette étape comprend notamment la définition d'instructions, dépendant des critères de fonctionnement transmis par le premier équipement et des besoins de communication définis par le deuxième équipement. Les instructions peuvent comprendre des consignes de communication, notamment des consignes portant sur la fréquence de communication et/ou des limites portant sur les plages de mesure.

Ainsi, au cours de l'étape de définition, des instructions de communication relatives aux communications futures entre le premier et le deuxième équipement sont définies.

Suite à l'étape de mise à jour, le deuxième équipement transmet au premier équipement les instructions de communication pour les échanges futurs, dans un mode de fonctionnement.

Les besoins de communication tels que le deuxième équipement les définit pour satisfaire les besoins de l'installation en termes de sécurité, de confort, ou ses propres besoins, sont eux dépendants notamment
- du protocole utilisé,
- des ressources en énergie disponibles pour le deuxième équipement ou d'autres équipements de l'installation,
- des ressources intelligentes des équipements, c'est-à-dire de ce que les équipements sont capables de gérer, seuls ou pour d'autres équipements, pour construire une cohérence de communication lorsque les besoins liés à la communication ne sont pas couverts par les critères de fonctionnement disponibles des équipements.

Ils reprennent également certains critères listés pour le capteur (unité de mesure, mode opératoire, fréquence, etc.).

Dans un premier cas, si les besoins de communication sont trop éloignés des critères de fonctionnement du capteur ou en d'autres termes, si les critères de fonctionnement du capteur ne conviennent pas aux besoins de l'installation, le point de commande peut alors décider de refuser de fonctionner avec ce capteur. Le point de commande peut alors refuser l'appairage et le signaler au travers de l'interface de saisie et d'information.

Dans un deuxième cas, si les besoins de communication sont partiellement couverts par les critères de fonctionnement du capteur, le point de commande peut substituer des données théoriques aux données manquantes ou modifier les besoins de communication préalablement définis.

Ces besoins de communication modifiés ne sont alors plus optimaux pour le point de commande mais ils sont adaptés aux critères de fonctionnement du capteur. Il s'agit alors d'un compromis de communication optimisé.

Dans un troisième cas favorable, les critères de fonctionnement du capteur et les besoins de communication définis par le point de commande se recoupent.

Dans ces différents cas, le point de commande définit sur la base de la comparaison entre les critères de fonctionnement et les besoins de communication, des instructions de communication à transmettre au capteur, permettant d'optimiser à la fois la garantie des communications et les ressources en énergie.

Lors de la réception des instructions, le capteur enregistre ces instructions et se conforme à celles-ci pour établir ou adapter le protocole de communication vers le point de commande dans le mode de fonctionnement. Notamment, dans cette étape d'adaptation du protocole de communication, un premier protocole de communication peut être choisi au détriment d'un deuxième sur la base des instructions reçues du point de commande. Cette étape d'adaptation peut être mise en oeuvre par le capteur.

En particulier, les instructions stipulent le mode d'émission des informations (périodique, évènementiel), la fréquence d'émission (soit la durée entre deux émissions) de valeur mesurée, l'échelle de valeurs, les seuils, etc. Ces instructions peuvent alternativement comprendre une information de refus de communication avec le premier équipement. Les instructions stipulent également les cas d'exception, au cours desquels le capteur peut déroger aux instructions. Ainsi, par exemple un capteur émettant des informations de manière périodique peut également fournir une information d'urgence de type batterie faible, accès illégal au capteur, mesure hors échelle nécessitant une recalibration, etc.

Ces cas d'exception peuvent éventuellement conduire à un basculement automatique dans un mode de reconfiguration, dans lequel les équipements en communication vont renégocier les paramètres de leur communication. Les étapes S1 à S6 sont alors réitérées automatiquement, partiellement ou totalement. Alternativement, les informations d'exception peuvent être signalées à un utilisateur pour qu'il puisse décider de déclencher manuellement une reconfiguration de l'installation ou de prendre toute autre mesure nécessaire.

L'invention a été plus particulièrement décrite dans le cas où le premier équipement est un capteur et le deuxième équipement un point de commande. Ceci prend tout son sens dans la mesure où dans une installation domotique, un capteur est le plus souvent inaccessible une fois monté et ne comprend qu'une interface utilisateur limitée. En revanche, un point de commande est disponible pour un utilisateur. L'inverse est cependant envisageable (le premier équipement est le point de commande, le deuxième équipement un capteur). De même, l'invention peut concerner un procédé de configuration entre un actionneur et un point de commande, entre un actionneur et un capteur ou entre deux équipements de même type.

Le procédé s'applique également dans le cas où le premier et le deuxième équipement ne communiquent pas directement entre eux mais par exemple par l'intermédiaire d'un boîtier-relais NG, comme par exemple de manière décrite dans le brevet FR2902916. Le boîtier-relais peut être alimenté sur secteur, en particulier dans le cas où les premier et deuxième équipements sont tous les deux autonomes.

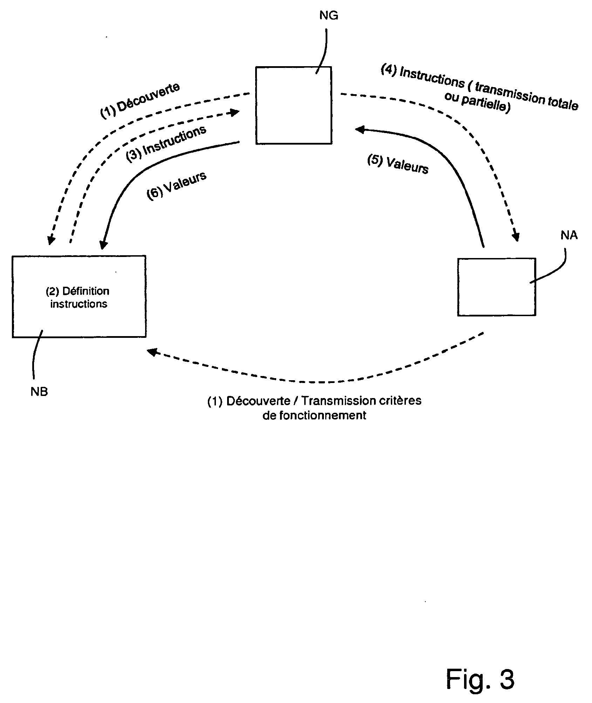

Dans ce cas, les communications ont lieu systématiquement ou de manière ponctuelle via le boîtier-relais, comme représenté sur la figure 3 schématisant le fonctionnement d'un deuxième mode d'exécution du procédé de configuration.

Sur cette figure, les flèches en pointillés représentent les communications dans un mode de configuration (régi par le deuxième mode d'exécution du procédé de configuration) et les flèches en trait plein, les communications dans un mode de fonctionnement.

L'étape (1) de découverte permet au point de commande NB de récupérer les informations d'identification et de fonctionnement du capteur NA et du boîtier-relais NG. La définition des instructions a lieu à l'étape (2) au niveau du point de commande. Celles-ci sont transmises à l'étape (3) au boîtier-relais. Les instructions sont retransmises partiellement, totalement ou de manière modifiée par le boîtier-relais vers le capteur à l'étape (4). En effet, il est possible que le boîtier-relais puisse gérer certaines des contraintes des autres équipements, notamment des contraintes d'autonomie. Les instructions fournies par le point de commande tiennent éventuellement compte de la présence dans l'installation d'un boîtier-relais (celui-ci peut avoir fourni, comme le capteur, un fichier de données d'identification et de paramètres fonctionnels, permettant au point de commande de définir des d'instructions optimisées). Dans une variante de l'invention, le boîtier-relais modifie les instructions transmises au capteur et gère de manière autonome certaines des communications requises par le point de commande.

Les flèches des étapes (5) et (6) montrent le cheminement des informations dans un mode de fonctionnement, du capteur vers le point de commande au travers du boîtier-relais. D'autres communications peuvent également avoir lieu mais ne sont pas représentées pour des raisons de clarté, par exemple des accusés de réception, des alertes, etc.

Dans le cas d'une installation comportant plusieurs capteurs et/ou plusieurs points de commande, le boîtier-relais peut, en fonction de différents jeux d'instructions fournis par différents points de commande, en faire une synthèse et ne transmettre que cette synthèse auprès du capteur (synthèse qui de préférence satisfera l'ensemble des requêtes des points de commande. Le boîtier-relais compile alors les différents jeux d'instructions pour soit définir un compromis, soit choisir la communication la plus exigeante, qui pourra satisfaire l'ensemble des points de commande demandeurs.

Avantageusement, le boîtier-relais définit le meilleur protocole (les meilleurs paramètres de communication) pour l'ensemble des équipements. Par exemple, si une première communication périodique vers un premier point de commande doit être établie toutes les 10 minutes alors qu'un deuxième point de commande requiert une communication périodique seulement toutes les 20 minutes, le boîtier-relais ne met pas en place une deuxième communication entre lui et le capteur mais va utiliser les résultats fournis par le capteur pour le premier point de commande pour satisfaire la demande du deuxième point de commande. Au regard d'une situation dans laquelle le capteur émettrait une nouvelle information à un instant t1 et à un instant t+10min pour le premier point de commande, et une information à un instant t2 et t2+20min (sans configuration et optimisation de l'installation), la quantité et la qualité des informations est largement optimisée grâce à l'invention.

Alternativement, un point de commande peut communiquer avec plusieurs capteurs. Dans ce cas, le point de commande vérifie l'adéquation entre les capacités (critères de fonctionnement) du capteur par rapport aux besoins des parties de l'installation (dans lesquelles interviennent les différents capteurs) et peut fournir des instructions individualisées à chacun des capteurs.

Le procédé de configuration décrit peut également comprendre au moins une autre étape de communication entre le premier élément et le deuxième élément suite à la réception, par le premier élément, des instructions de communication. En effet, le premier élément peut confirmer que ces instructions lui conviennent ou également signaler des améliorations à apporter à ces instructions de manière à optimiser les communications dans le mode de fonctionnement. L'objectif final reste évidemment de garantir la transmission des communications pour assurer la sécurité et le confort liés à l'installation domotique et d'optimiser les consommations énergétiques des différents équipements de l'installation.

## Revendications

1. Procédé de configuration d'une installation domotique comprenant un capteur (NA) et un point de commande (NB) d'un ou plusieurs équipements domotiques, le capteur et le point de commande étant aptes à communiquer l'un avec l'autre, **caractérisé en ce qu'**il comprend :
- une étape de découverte, au cours de laquelle le capteur informe le point de commande de critères de son fonctionnement,
- une étape de comparaison, au cours de laquelle le point de commande compare des critères de fonctionnement du capteur avec des besoins de communication qu'il définit pour l'installation,
- une étape de définition d'instructions de communication relatives aux communications futures entre le capteur et le point de commande,
- une étape de transmission des instructions de communication du point de commande au capteur, et
- une étape d'adaptation, aux instructions transmises par le point de commande, du protocole de communication entre le capteur et le point de commande, l'étape d'adaptation étant mise en oeuvre par le capteur,
les instructions de communication comprenant une instruction de fréquence des émissions d'information par le capteur et les instructions de communication étant définies pour optimiser la consommation en énergie du capteur et/ou du point de commande en diminuant la fréquence des émissions d'informations par le capteur.

2. Procédé de configuration selon la revendications précédentes, **caractérisé en ce que** les instructions de communication sont définies pour optimiser les garanties de transmission de l'information, notamment en favorisant des messages d'accusés de réception et/ou en favorisant la redondance des communications.

3. Procédé de configuration selon l'une des revendications précédentes, **caractérisé en ce que** les instructions de communication comprennent soit une sélection d'un mode de communication périodique, soit une sélection d'un mode de communication évènementiel.

4. Procédé de configuration selon l'une des revendications précédentes, **caractérisé en ce que** le capteur valide ou rejette les instructions de communication reçues.

5. Procédé de configuration selon l'une des revendications précédentes, **caractérisé en ce que** le point de commande refuse un appairage avec le capteur si au moins un critère de fonctionnement du capteur n'est pas adapté aux besoins de communication définis par le point de commande.

6. Procédé de configuration selon l'une des revendications 1 à 5, **caractérisé en ce que** le point de commande modifie les besoins de communication si au moins un critère de fonctionnement du capteur ne peut satisfaire ces besoins de communication.

7. Procédé de configuration selon l'une des revendications 1 à 5, **caractérisé en ce que** le point de commande compense un décalage entre les critères de fonctionnement du capteur et les besoins de communication définis par le point de commande pour le compte d'un troisième équipement.

8. Procédé de configuration selon l'une des revendications précédentes, **caractérisé en ce qu'**un équipement relais intervient dans le procédé de configuration pour recevoir les instructions de communication du point de commande et les transférer vers le capteur.

9. Installation domotique (1) comprenant un capteur (NA) et un point de commande (NB) aptes à communiquer l'un avec l'autre, **caractérisée en ce que** le capteur et le point de commande comprennent des moyens (2A, 5A, 2B, 5B, 2C, 5C) matériels et/ou logiciels mettant en oeuvre le procédé selon l'une des revendications précédentes, notamment mettant en oeuvre les étapes de la revendication 1.

10. Programme informatique comprenant un moyen de code de programme informatique adapté à la réalisation des étapes du procédé de configuration selon l'une des revendications 1 à 8, lorsque le programme est exécuté sur un ordinateur.

## Patentansprüche

1. Konfigurationsverfahren einer Heimanlage, umfassend einen Sensor (NA) und einen Steuerpunkt (NB) von einem oder mehreren Haustechnikgeräten, wobei der Sensor und der Steuerpunkt geeignet sind, miteinander zu kommunizieren, **dadurch gekennzeichnet, dass** es Folgendes aufweist:
- einen Schritt des Entdeckens, während dem der Sensor den Steuerpunkt über Kriterien seines Funktionierens informiert,
- einen Schritt des Vergleichens, während dem der Steuerpunkt Funktionskriterien des Sensors mit den Kommunikationsbedürfnissen vergleicht, die er für die Anlage definiert,
- einen Schritt des Definierens von Kommunikationsanweisungen in Bezug auf die zukünftigen Kommunikationen zwischen dem Sensor und dem Steuerpunkt,
- einen Schritt des Übertragens der Kommunikationsanweisungen von dem Steuerpunkt an den Sensor und
- einen Schritt des Anpassens des Kommunikationsprotokolls zwischen dem Sensor und dem Steuerpunkt an die Anweisungen, die von dem Steuerpunkt übertragen werden, wobei der Schritt des Anpassens von dem Sensor umgesetzt wird,
wobei die Kommunikationsanweisungen eine Frequenzanweisung der Informationssendungen durch den Sensor aufweisen und die Kommunikationsanweisungen definiert werden, um den Energieverbrauch des Sensors und/oder des Steuerpunkts zu optimieren, indem die Frequenz der Informationssendungen durch den Sensor verringert wird.

2. Konfigurationsverfahren nach dem vorhergehenden Anspruch, **dadurch gekennzeichnet, dass** die Kommunikationsanweisungen definiert werden, um die Garantien der Übermittlung der Information zu optimieren, insbesondere, indem Empfangsbestätigungsnachrichten begünstigt werden und/oder indem die Redundanz der Kommunikationen begünstigt wird.

3. Konfigurationsverfahren nach einem der vorhergehenden Ansprüche, **dadurch gekennzeichnet, dass** die Kommunikationsanweisungen sowohl ein Auswählen eines periodischen Kommunikationsmodus als auch ein Auswählen eines ereignisabhängigen Kommunikationsmodus aufweisen.

4. Konfigurationsverfahren nach einem der vorhergehenden Ansprüche, **dadurch gekennzeichnet, dass** der Sensor die erhaltenen Kommunikationsanweisungen validiert oder ablehnt.

5. Konfigurationsverfahren nach einem der vorhergehenden Ansprüche, **dadurch gekennzeichnet, dass** der Steuerpunkt ein Paaren mit dem Sensor ablehnt, wenn mindestens ein Funktionskriterium des Sensors für die Kommunikationsbedürfnisse, die von dem Steuerpunkt definiert werden, nicht geeignet ist.

6. Konfigurationsverfahren nach einem der Ansprüche 1 bis 5, **dadurch gekennzeichnet, dass** der Steuerpunkt die Kommunikationsbedürfnisse modifiziert, wenn mindestens ein Funktionskriterium des Sensors diese Kommunikationsbedürfnisse nicht erfüllen kann.

7. Konfigurationsverfahren nach einem der Ansprüche 1 bis 5, **dadurch gekennzeichnet, dass** der Steuerpunkt eine Diskrepanz zwischen den Funktionskriterien des Sensors und den Kommunikationsbedürfnissen kompensiert, die von dem Steuerpunkt für eine dritte Ausrüstung definiert werden.

8. Konfigurationsverfahren nach einem der vorhergehenden Ansprüche, **dadurch gekennzeichnet, dass** eine Relaisausrüstung in dem Konfigurationsverfahren eingreift, um die Kommunikationsanweisungen von dem Steuerpunkt zu empfangen und sie zu dem Sensor zu übertragen.

9. Heimanlage (1), umfassend einen Sensor (NA) und einen Steuerpunkt (NB), die geeignet sind, miteinander zu kommunizieren, **dadurch gekennzeichnet, dass** der Sensor und der Steuerpunkt Hard- und/oder -Softwaremittel (2A, 5A, 2B, 5B, 2C, 5C) aufweisen, die das Verfahren nach einem der vorhergehenden Ansprüche umsetzen, die insbesondere die Schritte des Anspruchs 1 umsetzen.

10. Computerprogramm, umfassend ein Computerprogrammcodemittel, das geeignet ist, die Schritte des Konfigurationsverfahrens nach einem der Ansprüche 1 bis 8 durchzuführen, wenn das Programm auf einem Computer ausgeführt wird.

## Claims

1. Method for configuring a home-automation installation comprising a sensor (NA) and a control point (NB) for one or more home-automation equipment items, the sensor and the control point being suitable for communicating with one another, **characterized in that in that** it comprises:
- a discovery step, during which the sensor informs the control point of criteria concerning its operation,
- a comparison step, during which the control point compares operating criteria of the sensor with communication needs that it defines for the installation,
- a step of definition of communication instructions concerning the future communications between the sensor and the control point,
- a step of transmission of the communication instructions from the control point to the sensor, and
- a step of adaptation, to the instructions transmitted by the control point, of the communication protocol between the sensor and the control point, the adaptation step being implemented by the sensor,
the communication instructions comprising an instruction of frequency of the transmissions of information by the sensor and the communication instructions being defined to optimize the energy consumption of the sensor and/or of the control point by reducing the frequency of the transmissions of information by the sensor.

2. Configuration method according to the preceding claim, **characterized in that** the communication instructions are defined to optimize the guarantees of transmission of the information, notably by favouring reception acknowledgement messages and/or by favouring communication redundancy.

3. Configuration method according to one of the preceding claims, **characterized in that** the communication instructions comprise either a selection of a periodic communication mode, or a selection of an event-driven communication mode.

4. Configuration method according to one of the preceding claims, **characterized in that** the sensor validates or rejects the communication instructions received.

5. Configuration method according to one of the preceding claims, **characterized in that** the control point refuses a pairing with the sensor if at least one operating criterion of the sensor is not suited to the communication needs defined by the control point.

6. Configuration method according to one of Claims 1 to 5, **characterized in that** the control point modifies the communication needs if at least one operating criterion of the sensor cannot satisfy these communication needs.

7. Configuration method according to one of Claims 1 to 5, **characterized in that** the control point compensates for a shift between the operating criteria of the sensor and the communication needs defined by the control point on behalf of a third equipment item.

8. Configuration method according to one of the preceding claims, **characterized in that** a relay equipment item is involved in the configuration method to receive the communication instructions from the control point and transfer them to the sensor.

9. Home-automation installation (1) comprising a sensor (NA) and a control point (NB) suitable for communicating with one another, **characterized in that** the sensor and the control point comprise hardware and/or software means (2A, 5A, 2B, 5B, 2C, 5C) implementing the method according to one of the preceding claims, notably implementing the steps of Claim 1.

10. Computer program comprising a computer program code means suitable for performing the steps of the configuration method according to one of Claims 1 to 8, when the program is run on a computer.
